# EUROPEAN PATENT SPECIFICATION

(11) **EP 1 780 437 B1**
(45) Date of publication and mention of the grant of the patent: **03.03.2010**
(21) Application number: 06121146.2
(22) Date of filing: 22.09.2006
(51) Int. Cl.: F16D 65/097

(54) **Flat spring for brake pads used in disc brakes, in particular for industrial vehicles**
Blattfeder für Bremsbeläge einer Scheibenbremse , insbesondere für Nutzfahrzeuge
Ressort à lame du patin de friction d'un frein à disque, notamment pour véhicules industriels

(30) Priority: 27.10.2005 IT TO20050763
(43) Date of publication of application: 02.05.2007
(73) Proprietor: Daico Automotive Products S.p.a., 10072 Mappano di Caselle Torinese (TO) (IT)
(72) Inventor: Palmisano, Pietro, 10128 Torino (IT); Mignatta, Alberto, 10152 Torino (IT)
(74) Representative: Rondano, Davide

(56) References cited:
- EP-A- 0 694 707
- EP-A- 1 473 481
- EP-A- 1 491 789
- WO-A-92/00465

## Description

The present invention relates to a flat spring for brake pads used in disc brakes, in particular for industrial vehicles, as specified in the preamble of independent claim 1.

In order to keep a brake pad positioned in the brake caliper, an elastic levering system, consisting of a flat spring mounted on the top side of the brake pad, is normally used.

A flat spring according to the preamble of independent Claim 1 is known from WO 92/00465 A. More specifically, this document discloses a flat spring for a brake pad for disc brakes, the pad having a pair of first rounded projections and a pair of second intermediate projections having undercut portions on their laterally outer, vertical sides. The spring has a pair of slits adapted to engage by mechanical interference with the second projections of the pad, by virtue of the fact that the laterally outer, transverse sides of the slits engage in the undercut portions of the projections.

The object of the present invention is to provide a flat spring which allows assembly thereof on several designs of brake pads, is easy to manufacture and is low-cost.

The invention achieves the abovementioned objects by means of a flat spring for brake pads used in disc brakes, in particular for industrial vehicles, having the characteristic features mentioned specifically in the claims below.

Further characteristic features and advantages of the present invention will emerge during the course of the detailed description below, provided purely by way of a non-limiting example, with reference to the accompanying drawings in which:
- Fig. 1 shows the flat spring according to the present invention;
- Fig. 2 shows the flat spring according to Fig. 1 positioned on a first type of brake pad for disc brakes;
- Fig. 3 is a plan view of the mounted flat spring according to Fig. 2;
- Fig. 4 is a magnified view of the part indicated by an arrow in Fig. 3;
- Fig. 5 shows the spring according to Fig. 1 mounted on a second type of brake pad for disc brakes;
- Fig. 6 is a plan view of Fig. 5;
- Fig. 7 is a magnified view indicated by an arrow in Fig. 6; and
- Fig. 8 shows part of the brake according to Fig. 1 mounted on a third type of brake pad for disc brakes.

With reference to the figures, 2 denotes the flat spring according to the present invention.

The spring 2 has a shape similar to that of the brake pad P, P' with which it must be associated.

The spring 2 has end portions 4, 6 terminating in terminal zones 8, 10, facing the opposite part of the pad P, P'.

The end portions 4, 6 have first slits, 12, 14 respectively, for mechanical interference engagement of the spring 2 with projections, lugs or rounded profiles, 16 and 18 respectively, present on most of the brake pads in use.

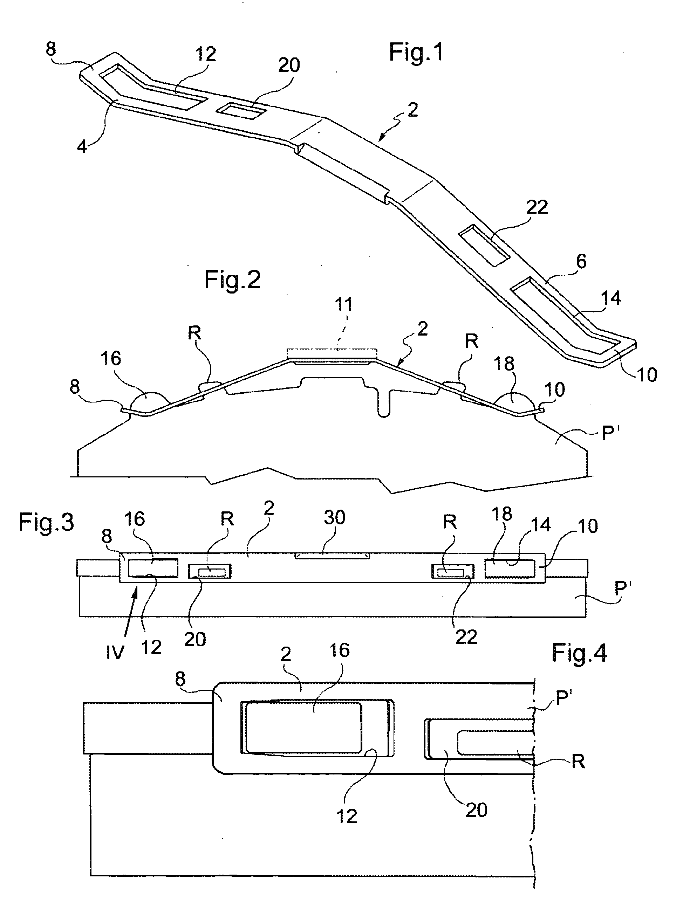

Second slits or recesses, 20, 22 respectively, are present so as to allow use of the spring 2 also on pads P' provided with intermediate projections (see Figs. 2-4).

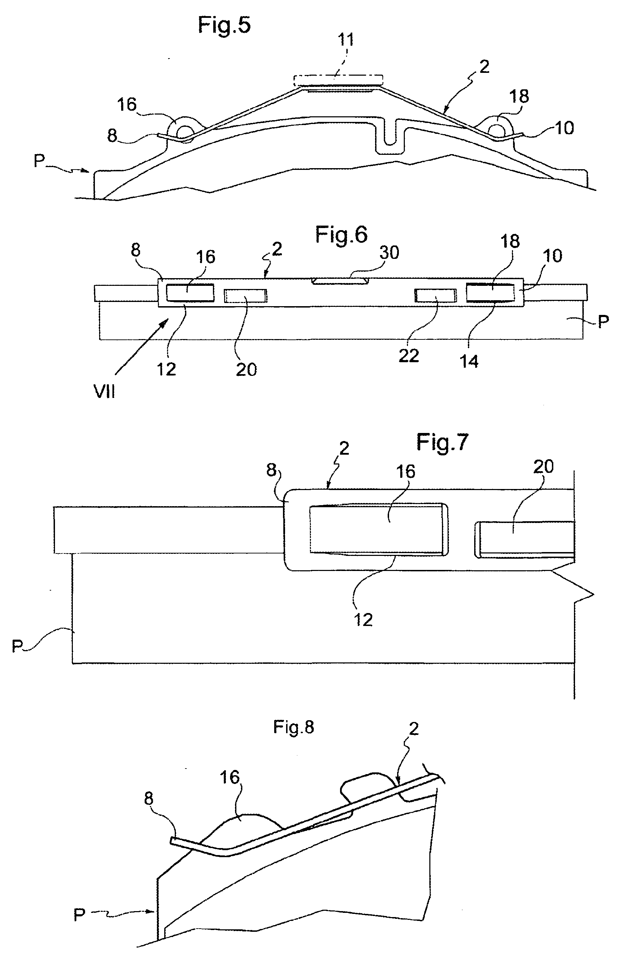

The spring 2 according to the invention is anchored or fixed to the pad P, P' by means of mechanical guillotine-type engagement (Figs. 2-8) between the walls of the first slits 12, 14 and projections, 16, 18, respectively.

The recesses 20, 22 allow the intermediate projections R to pass through them, so that the spring 2 may be used on brake pads P or P'.

A groove 30 facilitates mounting of a gripping lever in the seat of the brake caliper.

Owing to the mechanical engagement of the spring 2 on the radial profiles 16, 18, it is possible to raise the brake pad P, P' by means of the said spring 2.

The advantages of a spring according to the invention are obvious from the above description; it is centred and positioned on the brake pad and restricts its axial movements by means of the first slits, avoiding displacement and lateral outward movement of the spring; vibrations, noise and wobble during use are also prevented.

Obviously, without modifying the principle of the invention, ample variations may be made to that described and illustrated above, without thereby departing from the scope of protection of the invention.

## Claims

1. Flat spring (2) for brake pads (P, P') used in disc brakes, in particular for industrial vehicles, the spring (2) comprising end portions (4, 6) which have first slits (12, 14) for mechanical interference engagement with first projections (16, 18) of the pads (P, P') and which also have terminal zones (8, 10) facing the opposite parts of the pads (P, P'), **characterized in that** said first slits (12, 14) are configured to allow the spring (2) to be anchored or fixed to the pad (P, P') by means of mechanical guillotine-type engagement between the walls of the first slits (12, 14) of the spring (2) and first projections (16, 18) of the pad (P, P') respectively, whereby the pad (P, P') can be raised by means of the spring (2).

2. Flat spring according to Claim 1, further comprising second slits (20, 22) able to be passed through by second intermediate projections (R) of the pad (P').

## Patentansprüche

1. Blattfeder (2) für Bremsklötze (P, P'), die in Scheibenbremsen verwendet werden, insbesondere für Industriefahrzeuge, wobei die Feder (2) Endteile (4, 6) umfasst, die erste Schlitze (12, 14) für einen mechanischen Presseingriff mit ersten Vorsprüngen (16, 18) der Bremsklötze (P, P') aufweisen und die auch Endzonen (8, 10) aufweisen, die den gegenüberliegenden Teilen der Bremsklötze (P, P') zugewandt sind, **dadurch gekennzeichnet, dass** die ersten Schlitze (12, 14) so ausgelegt sind, dass sie ermöglichen, dass die Feder (2) am Bremsklotz (P, P') mittels eines mechanischen Eingriffs vom Guillotinetyp jeweils zwischen den Wänden der ersten Schlitze (12, 14) der Feder (2) und den ersten Vorsprüngen (16, 18) des Bremsklotzes (P, P') verankert oder befestigt wird, wodurch der Bremsklotz (P, P') mittels der Feder (2) angehoben werden kann.

2. Blattfeder nach Anspruch 1, welche ferner zweite Schlitze (20, 22) umfasst, durch die zweite Zwischenvorsprünge (R) des Bremsklotzes (P') geführt werden können.

## Revendications

1. Ressort plat (2) pour des plaquettes de frein (P, P') utilisées dans des freins à disques, en particulier pour des véhicules industriels, le ressort (2) comprenant des parties d'extrémité (4, 6) qui comportent des premières fentes (12, 14) pour une prise par interférence mécanique avec des premières saillies (16, 18) des plaquettes (P, P') et comportent aussi des zones terminales (8, 10) faisant face aux parties opposées des plaquettes (P, P'),
**caractérisé en ce que** lesdites premières fentes (12, 14) sont configurées pour permettre au ressort (2) d'être ancré ou fixé sur la plaquette (P, P') au moyen d'une prise du type guillotine mécanique entre les parois des premières fentes (12, 14) du ressort (2) et des premières saillies (16, 18) des plaquettes (P, P') respectivement, moyennant quoi la plaquette (P, P') peut être soulevé au moyen du ressort (2).

2. Ressort plat selon la revendication 1, comprenant en outre des secondes fentes (20, 22) pouvant être traversées par des secondes saillies intermédiaires (R) de la plaquette (P').
